# EUROPEAN PATENT SPECIFICATION

(11) **EP 3 683 002 B1**
(45) Date of publication and mention of the grant of the patent: **02.08.2023**
(21) Application number: 18853690.8
(22) Date of filing: 10.09.2018
(51) Int. Cl.: B23K 26/064, B23K 26/70

(54) **LASER PROCESSING HEAD, OPTICAL FIBER INSPECTION DEVICE, AND OPTICAL FIBER INSPECTION METHOD**
LASERBEARBEITUNGSKOPF, GLASFASERPRÜFVORRICHTUNG UND VERFAHREN ZUR PRÜFUNG VON GLASFASERN
TÊTE DE TRAITEMENT LASER, DISPOSITIF D'INSPECTION DE FIBRE OPTIQUE ET PROCÉDÉ D'INSPECTION DE FIBRE OPTIQUE

(30) Priority: 11.09.2017 JP 2017174075
(43) Date of publication of application: 22.07.2020
(73) Proprietor: Panasonic Intellectual Property Management Co., Ltd., Osaka-shi, Osaka 540-6207 (JP)
(72) Inventor: EIZUMI, Kiyotaka, Osaka-shi, Osaka 540-6207 (JP); YAMASHITA, Takayuki, Osaka-shi, Osaka 540-6207 (JP); NAGAYASU, Doukei, Osaka-shi, Osaka 540-6207 (JP); HOSHINO, Kenji, Osaka-shi, Osaka 540-6207 (JP); YAMAGUCHI, Hideaki, Osaka-shi, Osaka 540-6207 (JP); KATO, Naoya, Osaka-shi, Osaka 540-6207 (JP); ISHIKAWA, Ryo, Osaka-shi, Osaka 540-6207 (JP); DOMOTO, Shinya, Osaka-shi, Osaka 540-6207 (JP)
(74) Representative: Vigand, Philippe
(86) International application number: PCT/JP2018/033350
(87) International publication number: WO 2019/050023

(56) References cited:
- EP-A1- 2 769 799
- DE-A1- 4 032 967
- DE-A1-102008 028 347
- JP-A- H02 187 292
- JP-A- 2010 188 368
- JP-A- 2010 188 368
- JP-A- 2013 099 783
- JP-B2- 3 368 427

## Description

### TECHNICAL FIELD

The present disclosure relates to a laser processing head, an optical fiber inspection device that inspects an optical fiber connected to the laser processing head, and an optical fiber inspection method by which an optical fiber connected to the laser processing head is inspected.

### BACKGROUND

There has been known a laser processing device that wave-guides outgoing light from a laser (e.g., gas laser, solid laser) oscillator through an optical fiber, radiates the light from the laser processing head toward a workpiece to weld and to process the workpiece (refer to PTL 1 for example).

A laser processing head according to the preamble of claim 1 is, for example, known from JP 2010 188368 A.

EP 2 769 799 A1 relates to a laser processing device that allows to image the condition of the end of the optical fiber in the laser processing head.

### Citation List

### Patent Literature

PTL 1: Japanese Patent Unexamined Publication No. 2007-030032

### SUMMARY

### Problems to be Solved by the Invention

In an existing laser processing device, an optical fiber is connected to the laser processing head usually after the laser emission end face of the optical fiber is checked for dust or stain. This is because an undesired substance such as dust on the end face may be burned by laser light, damaging the end surface.

In the existing configuration described above, however, the end face cannot be checked after an optical fiber is connected to the laser processing head. For this reason, if an undesired substance such as dust attaches to the end face in the process of connecting the optical fiber to the laser processing head, the end face may be damaged in the subsequent laser processing.

In view of such a point, an object of the present disclosure is to provide a laser processing head that allows checking the laser emission end face of an optical fiber in a state where the optical fiber is connected to the end face, an optical fiber inspection device that inspects the optical fiber connected to the laser processing head, and an optical fiber inspection method by which the optical fiber connected to the laser processing head is inspected.

### Means to Solve the Problems

A laser processing head according to the invention is disclosed in claim 1.

An optical fiber inspection device according to the invention is disclosed in claim 2.

An optical fiber inspection method according to the invention is disclosed in claim 3.

### Advantage of the Invention

As described above, a laser processing head according to the invention
is capable of inspecting the laser emission end face of an optical fiber in a state where the optical fiber is connected to the laser processing head. Furthermore, the end face can be observed without the need of detaching the optical fiber from the laser processing head, which allows the maintenance frequency of the laser processing head to be appropriately determined.

By an optical fiber inspection device and an optical fiber inspection method according to the invention, illumination light can be radiated onto the laser emission end face without the need of detaching an optical fiber from the laser processing head for observing conditions of the end face.

### BRIEF DESCRIPTION OF DRAWINGS

FIG. 1 illustrates the configuration of a laser processing device according to the first embodiment not covered by the present invention.
FIG. 2 illustrates the main part of a laser processing head to which an optical fiber and an optical fiber inspection device according to the first embodiment, not covered by the present invention, are attached.
FIG. 3 illustrates the main part of a laser processing head to which an optical fiber and an optical fiber inspection device according to the second embodiment are attached.

### DESCRIPTION OF EMBODIMENTS

Hereinafter, a detailed description is made of some embodiments of the present disclosure with reference to the related drawings. The following description of preferred embodiments is essentially for exemplification only and definitely is not intended to restrict the present invention as defined by the appended claims.

### FIRST EXEMPLARY EMBODIMENT (not covered by the present invention)

### Configuration of Laser Processing Device

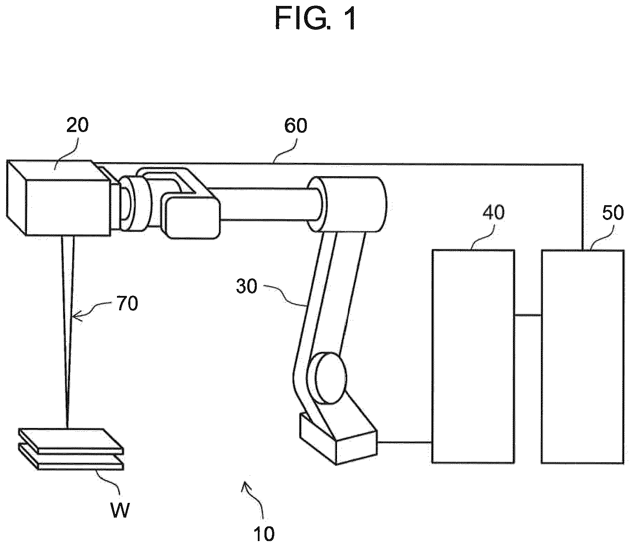

FIG. 1 illustrates the configuration of laser processing device 10 according to the embodiment. Laser processing device 10 includes laser processing head 20, manipulator 30, control unit 40, laser oscillator 50, and optical fiber 60.

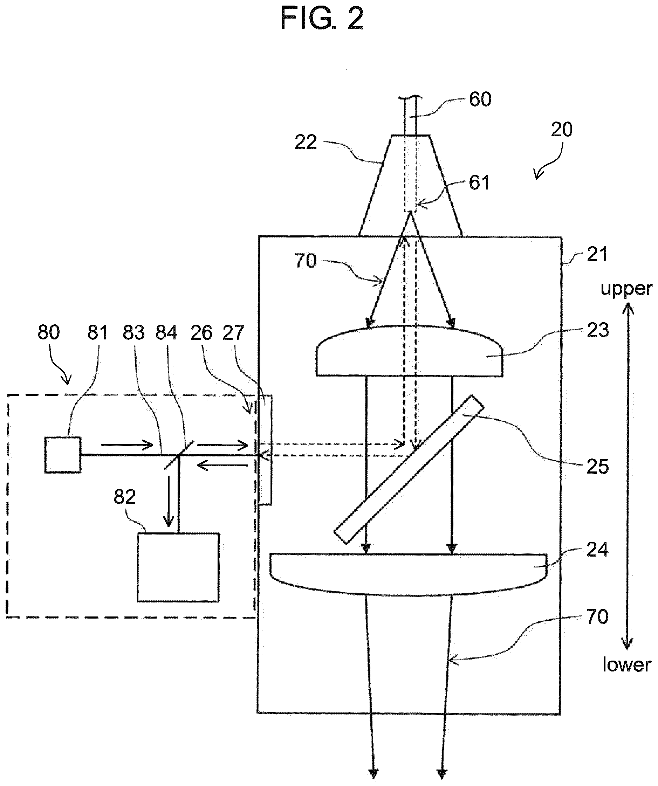

Laser processing head 20 radiates laser light 70 from optical fiber 60 toward workpiece W. Manipulator 30, to the tip of which laser processing head 20 is attached, moves laser processing head 20. Control unit 40 controls the operation of laser processing head 20, the operation of manipulator 30, and the laser oscillation of laser oscillator 50. Laser oscillator 50 oscillates laser light 70 and outputs it to optical fiber 60. Optical fiber 60 transmits laser light 70 output from laser oscillator 50, to laser processing head 20. With such a configuration, laser processing device 10 activates laser processing head 20 and manipulator 30 to radiate laser light 70 output from laser oscillator 50, toward workpiece W in a desired locus for cutting off, welding, and drilling workpiece W for example. For a regular inspection or other work, optical fiber inspection device 80 is attached to laser processing head 20 (refer to FIG. 2).

### Configuration of Main Part of Laser Processing Head

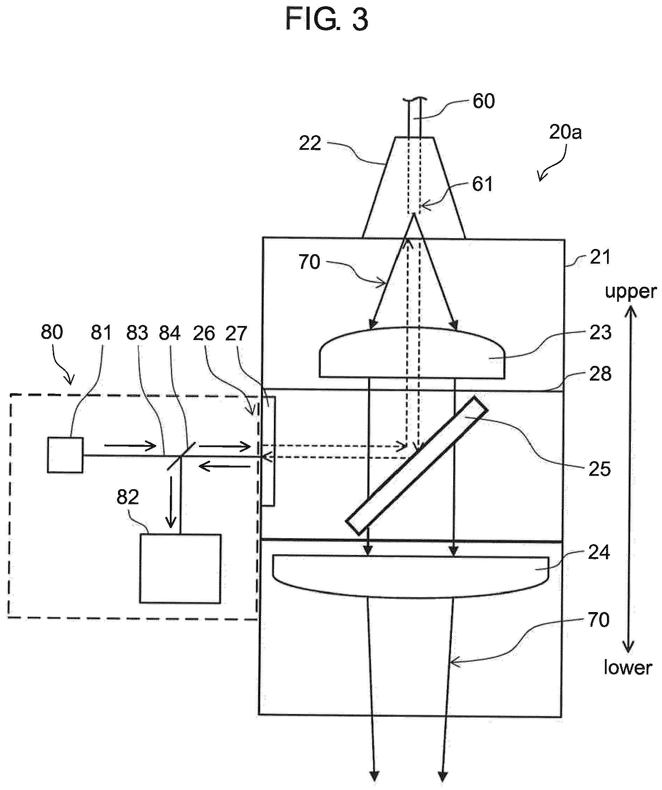

FIG. 2 illustrates the main part of laser processing head 20 to which optical fiber 60 and optical fiber inspection device 80 are attached. Note that the illustration and description of a component not directly related to the disclosure are omitted for convenience of description. In the following description, the part of laser processing head 20 where laser light 70 enters may be referred to as "upper"; the part where laser light 70 goes out from, as "lower." Each broken-line arrow in FIGs. 2 and 3 schematically indicates the direction of a light beam and is not intended to show the center of an optical axis or the spread of light.

Laser processing head 20 includes case 21, connector 22, collimator lens 23, light-collecting lens 24, and wavelength selection mirror 25.

Case 21, to the topside of which connector 22 is attached, contains collimator lens 23, light-collecting lens 24, and wavelength selection mirror 25. There is transmission window 26 into which cover glass 27 is inserted, provided in the sidewall. There is a nozzle (unillustrated) for radiating laser light 70 toward workpiece W, provided at the lower part of light-collecting lens 24. As a result that optical components such as collimator lens 23 are retained inside case 21 while maintaining a given layout, the optical axis of laser light 70 emitted from laser processing head 20 is defined. Case 21 prevents dust and stain for example from attaching to optical components and stops laser light 70 from unintendedly leaking to the outside. Connector 22 connects and holds optical fiber 60 to laser processing head 20.

Collimator lens 23 converts laser light 70 that has been emitted from laser emission end face 61 of optical fiber 60 and has spread for example to a parallel light beam. Light-collecting lens 24 light-collects laser light 70 converted to this parallel light beam to a given position. Laser light 70 is radiated toward a given process point of workpiece W through the nozzle. At this time, the distance between laser processing head 20 and workpiece W is adjusted using manipulator 30 for example so that the focal point of light-collecting lens 24 is positioned on or near the surface of workpiece W.

Wavelength selection mirror 25 is provided inside case 21 and also in the optical path of laser light 70 between collimator lens 23 and light-collecting lens 24. Wavelength selection mirror 25 is configured to transmit laser light 70 while reflecting light of a given wavelength different from that of laser light 70. Concretely, adjustment is made of the configuration of a wavelength selection filter (unillustrated) formed on the top surface of wavelength selection mirror 25, which provides a desired wavelength selectivity.

Transmission window 26, provided in order to introduce light from the outside to the inside of case 21, has cover glass 27 inserted into transmission window 26 to maintain airtightness inside case 21. Transmission window 26 is positioned where laser emission end face 61 of optical fiber 60 can be optically observed through wavelength selection mirror 25. In other words, the layout of optical fiber 60, wavelength selection mirror 25, and transmission window 26 is defined so that light that has been transmitted by transmission window 26 is reflected by wavelength selection mirror 25 and illuminates laser emission end face 61. Here, laser light 70 has been converted to a parallel light beam by collimator lens 23, and thus the distance between collimator lens 23 and light-collecting lens 24 (a section where laser light 70 is parallel) is subject to no substantial constraints, which facilitates disposing wavelength selection mirror 25 in the section. Optical fiber inspection device 80 includes illumination light source 81 that emits light of a given wavelength different from that of laser light 70, optical observation device 82 for observing laser emission end face 61 of optical fiber 60 illuminated by light from illumination light source 81, light-guiding member 83, and light-branching member 84.

Note that optical fiber inspection device 80 is detached from laser processing head 20 for regular laser processing; is attached to laser processing head 20 to inspect optical fiber 60 (especially conditions of laser emission end face 61) for regular inspection for example. Illumination light source 81 and optical observation device 82 may be disposed as one device for example or as individual devices.

Connection is made between illumination light source 81 and transmission window 26 by light-guiding member 83. There is light-branching member 84 such as a half mirror disposed in the path of light-guiding member 83.

As described above, wavelength selection mirror 25 is configured to reflect light of a given wavelength different from that of laser light 70, and thus the light of the given wavelength different from that of laser light 70 emitted from illumination light source 81 goes toward wavelength selection mirror 25 through light-guiding member 83 and light-branching member 84, is reflected by wavelength selection mirror 25, and illuminates laser emission end face 61. Then, return light reflected by laser emission end face 61 is reflected by wavelength selection mirror 25, and is led to optical observation device 82, which allows laser emission end face 61 to be optically observed using optical observation device 82. Based on the observation results, conditions of laser emission end face 61 can be inspected, such as buildup of dust for example, burning of the end face, and damage to the end face.

As described hereinbefore, according to the embodiment, laser processing head 20 is provided with transmission window 26 and wavelength selection mirror 25 for optically observing laser emission end face 61 of optical fiber 60, which allows inspecting laser emission end face 61 of optical fiber 60 from the outside of laser processing head 20. In this way, as a result that laser emission end face 61 of optical fiber 60 is observed from transmission window 26 through wavelength selection mirror 25, conditions of laser emission end face 61 can be inspected in-situ. That is, inspection can be done in a state where an optical fiber is connected to the laser processing head with the layout of transmission window 26 and wavelength selection mirror 25 actually placed in laser processing head 20. Thus, the appropriate time for replacing optical fiber 60 can be determined for example. Besides, conditions of laser emission end face 61 can be inspected without the need of detaching optical fiber 60 from laser processing head 20, and thus the maintenance frequency of laser processing head 20 can be appropriately determined, which reduces costs for maintenance for example.

To use an optical fiber for light-guiding member 83, it is reasonable to provide an optical fiber port (unillustrated) instead of transmission window 26 and to connect an optical fiber. Besides, it is preferable that there is an antireflection film (unillustrated) provided that prevents reflection of illumination light from illumination light source 81 and return light from laser emission end face 61, on the inner and outer surfaces of cover glass 27 inserted into transmission window 26. Using an optical coherence tomography device as optical fiber inspection device 80 allows conditions of laser emission end face 61 to be observed in high resolution, which increases the inspection accuracy.

There may be a wavelength selection filter (unillustrated) provided that transmits illumination light from illumination light source 81 while cutting laser light 70, in contact with or near the surface of transmission window 26 or the optical fiber port close to case 21. Such a configuration significantly reduces the component of laser light 70 that enters optical observation device 82, which increases the observation accuracy.

### SECOND EXEMPLARY EMBODIMENT

FIG. 3 illustrates the main part of laser processing head 20a to which optical fiber 60 and optical fiber inspection device 80 according to the embodiment are attached.

The configuration shown in this embodiment according to the invention, is different from that shown in the first embodiment, not covered by the present invention, (refer to FIG. 2) in that detachable optical block 28 is attached to case 21. Optical block 28 has openings or transmission windows (unillustrated) at the upper and lower parts of optical block 28, between collimator lens 23 and light-collecting lens 24 in case 21 so as to transmit laser light 70 and light from illumination light source 81. There is transmission window 26 provided in the sidewall of this optical block 28, and there is wavelength selection mirror 25 provided inside optical block 28. Here, the material of optical block 28 is preferably same as that of case 21.

As described above, wavelength selection mirror 25 is configured to transmit laser light 70; however, wavelength selection mirror 25 having a transmittance of 100% is infeasible, and thus part of laser light 70 (e.g., 0. several percent) is reflected and is absorbed into case 21.

Meanwhile, laser processing demands a higher output power of laser light 70, where a loss of laser light 70 due to the above-described reflection needs to be suppressed. Besides, case 21 absorbs part of laser light 70, which increases the temperature of case 21 and thermally expands case 21. This may cause the layout of the optical components provided inside case 21 to be deviated from a given layout. Also, a temperature rise may speed up the deterioration of case 21, which shortens its service life.

Hence, as described in this embodiment, optical block 28 detachable from case 21 is provided, and wavelength selection mirror 25 and transmission window 26, which are components required for observing conditions of laser emission end face 61 of optical fiber 60, are provided in optical block 28. This structure can suppress a loss of laser light 70 by detaching optical block 28 for regular laser processing. Only for inspecting optical fiber 60, optical block 28 is attached to case 21, and conditions of laser emission end face 61 can be observed using optical fiber inspection device 80.

In the first and second embodiments, an optical fiber may be used as light-guiding member 83, for example, in order to observe laser emission end face 61 from transmission window 26, where light-guiding member 83 does not need to be used.

A wavelength selection filter may be provided on the undersurface of wavelength selection mirror 25. Alternatively, wavelength selection mirror 25 itself may be given the above-described wavelength selectivity.

The description is made that transmission window 26 is provided in the sidewall of case 21 in the first embodiment; in the sidewall of optical block 28, in the second embodiment. The position where transmission window 26 is provided is not limited to a sidewall. It is only required that transmission window 26 is provided at a position where the transmitted light of a given wavelength different from that of laser light 70 from illumination light source 81 is reflected by wavelength selection mirror 25 and illuminates laser emission end face 61 of optical fiber 60 directly or indirectly.

### Advantages

As described above, it is preferable that a detachable optical block is provided between the collimator lens and light-collecting lens in the case; the transmission window is provided in the optical block instead of the case; and the wavelength selection mirror is provided inside the optical block.

With this configuration, the laser emission end face can be observed without the need of detaching the optical fiber from the laser processing head, and a loss of laser light can be suppressed by detaching the optical block for regular laser processing.

### INDUSTRIAL APPLICABILITY

With a laser processing head, an optical fiber inspection device that inspects an optical fiber connected to the laser processing head, and an optical fiber inspection method by which an optical fiber connected to the laser processing head is inspected, conditions of the laser emission end face can be inspected without the need of detaching the optical fiber, and thus it is useful to apply them to a laser processing device that processes a large number of workpieces with high output power.

### REFERENCE MARKS IN THE DRAWINGS

- 10: laser processing device
- 20: laser processing head
- 20a: laser processing head
- 21: case
- 22: connector
- 23: collimator lens
- 24: light-collecting lens
- 25: wavelength selection mirror
- 26: transmission window
- 27: cover glass
- 28: optical block
- 30: manipulator
- 40: control unit
- 50: laser oscillator
- 60: optical fiber
- 61: laser emission end face
- 70: laser light
- 80: optical fiber inspection device
- 81: illumination light source
- 82: optical observation device
- 83: light-guiding member
- 84: light-branching member
- W: workpiece

## Claims

1. A laser processing head (20) that is connected to an optical fiber (60) and radiates laser light (70) wave-guided by the optical fiber (60) toward a workpiece (W), comprising:
a collimator lens (23) that converts the laser light (70) into a parallel light beam;
a light-collecting lens (24) that collects the laser light (70) converted into the parallel light beam;
a case (21) that contains the collimator lens (23) and the light-collecting lens (24);
a wavelength selection mirror (25) that is provided in an optical path of the laser light (70) between the collimator lens (23) and the light-collecting lens (24) and transmits the laser light (70), while reflecting light of a given wavelength different from a wavelength of the laser light (70);
**characterized in that** the laser processing head (20) further comprises
a transmission window (26) provided at a position where the light of the given wavelength is transmitted and also where a laser emission end face (61) of the optical fiber (60) can be optically observed through the wavelength selection mirror (25); and
an optical block (28) that is detachably provided between the collimator lens (23) and the light-collecting lens (24) in the case (21), has the transmission window (26) in a sidewall of the optical block (28), and contains the wavelength selection mirror (25).

2. An optical fiber inspection device (80) connected to the laser processing head (20) of claim 1, comprising:
an illumination light source (81) that illuminates the laser emission end face (61) with the light of the given wavelength different from the wavelength of the laser light (70), from the transmission window (26) through the wavelength selection mirror (25);
an optical observation device (82) that allows the laser emission end face (61) illuminated by the illumination light source (81) to be observed from the transmission window (26) through the wavelength selection mirror (25);
a light-guiding member (83); and
a light-branching member (84).

3. An optical fiber inspection method by which the optical fiber (60) connected to the laser processing head (20) of claim 1 is inspected, comprising the steps of:
illuminating the laser emission end face (61) with the light of the given wavelength different from the wavelength of the laser light (70), from the transmission window (26) through the wavelength selection mirror (25);
optically observing the laser emission end face (61) with the light of the given wavelength, from the transmission window (26) through the wavelength selection mirror (25); and
inspecting conditions of the laser emission end face (61) based on an observation result in the step of optically observing.

## Patentansprüche

1. Laserbearbeitungskopf (20), der mit einer optischen Faser (60) verbunden ist und Laserlicht (70) ausstrahlt, das durch die optische Faser (60) hin zu einem Werkstück (W) wellengeleitet wird, umfassend:
eine Kollimatorlinse (23), die das Laserlicht (70) in einen parallelen Lichtstrahl umwandelt;
eine Lichtsammellinse (24), die das in den parallelen Lichtstrahl umgewandelte Laserlicht (70) sammelt;
ein Gehäuse (21), das die Kollimatorlinse (23) und die Lichtsammellinse (24) enthält;
einen Wellenlängen-Auswahlspiegel (25), der in einem Lichtweg des Laserlichts (70) zwischen der Kollimatorlinse (23) und der Lichtsammellinse (24) bereitgestellt ist und das Laserlicht (70) durchlässt, während er Licht mit einer gegebenen Wellenlänge, die sich von einer Wellenlänge des Laserlichts (70) unterscheidet, reflektiert;
**dadurch gekennzeichnet, dass** der Laserbearbeitungskopf (20) ferner Folgendes umfasst:
ein Durchlassfenster (26), das an einer Position, wo das Licht mit der gegebenen Wellenlänge durchgelassen wird und auch wo eine Laseremissionsendseite (61) der optischen Faser (60) optisch durch den Wellenlängen-Auswahlspiegel (25) beobachtet werden kann, bereitgestellt ist; und
einen optischen Block (28), der abnehmbar zwischen der Kollimatorlinse (23) und der Lichtsammellinse (24) in dem Gehäuse (21) bereitgestellt ist, das Durchlassfenster (26) in einer Seitenwand des optischen Blocks (28) aufweist und den Wellenlängen-Auswahlspiegel (25) enthält.

2. Vorrichtung (80) zur Prüfung optischer Fasern, die mit dem Laserbearbeitungskopf (20) nach Anspruch 1 verbunden ist, umfassend:
eine Beleuchtungslichtquelle (81), welche die Laseremissionsendseite (61) mit dem Licht mit der gegebenen Wellenlänge, die sich von der Wellenlänge des Laserlichts (70) unterscheidet, von dem Durchlassfenster (26) durch den Wellenlängen-Auswahlspiegel (25) beleuchtet;
eine optische Beobachtungsvorrichtung (82), die das Beobachten der Laseremissionsendseite (61), die von Beleuchtungslichtquelle (81) beleuchtet wird, von dem Durchlassfenster (26) durch den Wellenlängen-Auswahlspiegel (25) ermöglicht;
ein Lichtleitelement (83); und
ein Lichtverzweigungselement (84).

3. Verfahren zur Prüfung optischer Fasern, durch das die optische Faser (60), die mit dem Laserbearbeitungskopf (20) nach Anspruch 1 verbunden ist, geprüft wird, das die folgenden Schritte umfasst:
Beleuchten der Laseremissionsendseite (61) mit dem Licht mit der gegebenen Wellenlänge, die sich von der Wellenlänge des Laserlichts (70) unterscheidet, von dem Durchlassfenster (26) durch den Wellenlängen-Auswahlspiegel (25);
optisches Beobachten der Laseremissionsendseite (61) mit dem Licht mit der gegebenen Wellenlänge von dem Durchlassfenster (26) durch den Wellenlängen-Auswahlspiegel (25); und
Prüfen von Zuständen der Laseremissionsendseite (61) basierend auf einem Beobachtungsergebnis in dem Schritt des optischen Beobachtens.

## Revendications

1. Tête de traitement laser (20) qui est connectée à une fibre optique (60) et qui rayonne une lumière laser (70) guidée par ondes par la fibre optique (60) vers une pièce à usiner (W), comprenant :
une lentille de collimation (23) qui convertit la lumière laser (70) en un faisceau lumineux parallèle ;
une lentille collectrice de lumière (24) qui recueille la lumière laser (70) convertie en faisceau lumineux parallèle ;
un boîtier (21) qui contient la lentille de collimation (23) et la lentille collectrice de lumière (24) ;
un miroir de sélection de longueur d'onde (25) qui est prévu dans un chemin optique de la lumière laser (70) entre la lentille de collimation (23) et la lentille collectrice de lumière (24), et qui transmet la lumière laser (70) tout en réfléchissant la lumière d'une longueur d'onde donnée qui est différente d'une longueur d'onde de la lumière laser (70) ;
**caractérisée en ce que** la tête de traitement laser (20) comprend en outre
une fenêtre de transmission (26) prévue dans une position où la lumière de la longueur d'onde donnée est transmise, et également où une face d'extrémité d'émission laser (61) de la fibre optique (60) peut être observée optiquement à travers le miroir de sélection de longueur d'onde (25) ; et
un bloc optique (28) qui est prévu de manière amovible entre la lentille de collimation (23) et la lentille collectrice de lumière (24) dans le boîtier (21), la fenêtre de transmission (26) se trouvant dans une paroi latérale du bloc optique (28), et qui contient le miroir de sélection de longueur d'onde (25).

2. Dispositif d'inspection de fibres optiques (80) connecté à la tête de traitement laser (20) selon la revendication 1, comprenant :
une source lumineuse d'éclairage (81) qui éclaire la face d'extrémité d'émission laser (61) avec la lumière de la longueur d'onde donnée qui est différente de la longueur d'onde de la lumière laser (70), à partir de la fenêtre de transmission (26) à travers le miroir de sélection de longueur d'onde (25) ;
un dispositif d'observation optique (82) qui permet d'observer la face d'extrémité d'émission laser (61) éclairée par la source lumineuse d'éclairage (81) à partir de la fenêtre de transmission (26) à travers le miroir de sélection de longueur d'onde (25) ;
un élément de guidage optique (83) ; et
un élément dérivation de lumière (84).

3. Procédé d'inspection de fibre optique par lequel est inspectée la fibre optique (60) connectée à la tête de traitement laser (20) selon la revendication 1, comprenant les étapes suivantes :
éclairer la face d'extrémité d'émission laser (61) avec la lumière de la longueur d'onde donnée qui est différente de la longueur d'onde de la lumière laser (70), à partir de la fenêtre de transmission (26) à travers le miroir de sélection de longueur d'onde (25) ;
observer optiquement la face d'extrémité d'émission laser (61) avec la lumière de la longueur d'onde donnée, à partir de la fenêtre de transmission (26) à travers le miroir de sélection de longueur d'onde (25) ; et
inspecter les conditions de la face d'extrémité d'émission laser (61) sur la base d'un résultat d'observation à l'étape d'observation optique.
